# DEMANDE DE BREVET EUROPEEN

(11) **EP 1 688 367 A1**
(43) Date de publication de la demande: **09.08.2006**
(21) Numéro de dépôt: 06366001.3
(22) Date de dépôt: 25.01.2006
(51) Int. Cl.: B65D 77/04

(54) **Conditionnement pour la vente et la présentation à la vente d'un produit servant de base à une préparation culinaire dans le domaine de l'ultra-frais**

(30) Priorité: 04.02.2005 FR 0501109
(71) Demandeur: Bernard, Jean-Yves, 29910 Tregunc (FR); Bourhis, Marcel, 29900 Concarneau (FR)
(72) Inventeur: Bernard, Jean-Yves, 29910 Tregunc (FR); Bourhis, Marcel, 29900 Concarneau (FR)
(74) Mandataire: Poupon, Michel

(57) **Abrégé**

Conditionnement pour la vente et la présentation à la vente d'un produit servant de base à une préparation culinaire, caractérisé en ce qu'il consiste en un conditionnement en forme de barquette sous vide ou sous atmosphère modifiée, avec indication d'une date limite de consommation, d'ingrédients précuits et d'un fond de papillote (4) épousant sensiblement la forme du corps de la barquette, ledit conditionnement étant muni d'un moyen d'operculage étanche (3)avec indication d'une première date limite de consommation, ledit fond de papillote comportant un volume suffisant pour recevoir, après ouverture, un produit frais choisi par le consommateur, avec apposition ultérieure sur un espace prévu à cette fin d'une seconde date limite de consommation spécifique audit produit frais.

## Description

La présente invention concerne le domaine des produits alimentaires et, plus particulièrement un conditionnement pour la vente et la présentation à la vente d'un produit servant de base à une préparation culinaire dans le domaine de l'ultra-frais.

Le consommateur attentif à une nourriture équilibrée et maîtrisée, est de plus en plus vigilant au choix et à la maîtrise des produits qu'il consomme, tout en bénéficiant d'une nourriture agréable au goût et en présentation.

Les contraintes de temps imposées par la vie professionnelle, ou simplement par choix, ou en outre que le consommateur ne souhaite pas nécessairement consacrer trop de temps en cuisine.

L'équilibre est donc recherché et à trouver, entre une cuisine dite « fraîche » toute préparée (traiteur, conserves) et une cuisine traditionnelle où le consommateur doit acheter tous les ingrédients et les cuisiner lui-même.

De manière générale, ce n'est pas la partie principale d'un plat, viande ou poisson, qui prend du temps en cuisine, mais l'accompagnement et les ingrédients de garniture.

Dans ce contexte, et pour résoudre ce problème, il est proposé à titre de produit industriel nouveau un conditionnement pour la vente et la présentation à la vente d'un produit servant de base à une préparation culinaire, caractérisé en ce qu'il consiste en un conditionnement en forme de barquette sous vide ou sous atmosphère modifiée, avec indication d'une date limite de consommation, d'ingrédients précuits et d'un fond de papillote, épousant sensiblement la forme du corps de la barquette, ledit conditionnement étant muni d'un moyen d'operculage étanche avec indication d'une première date limite de consommation, ledit fond de papillote comportant un volume suffisant pour recevoir, après ouverture, un produit frais choisi par le consommateur, avec apposition ultérieure sur un espace prévu à cette fin d'une seconde date limite de consommation spécifique audit produit frais.

Dans ce contexte, on gratifiera de produit frais tout produit effectivement brut ou un produit ayant subi une pré-élaboration, par exemple un produit mariné à cru.

L'indication permet de commercialiser, de manière simple, des produits semi-frais, au choix du consommateur, qui sont complétés en magasin (boucherie, poissonnerie) par le produit frais également choisi par le consommateur.

Les conditionnement conformes à l'invention pourront également être utilisés avantageusement en restauration rapide ou traditionnelle.

En particulier, ils permettent de reproduire la cuisson vapeur de type papillote tout en préservant les qualités intrinsèques du matériau frais ou mariné à cru. On peut ainsi, de manière simple et accessible à tous poursuivre la juste cuisson du produit, sensible par nature, dans un assemblage culinaire tout en apportant au consommateur le plaisir du choix de ses aliments comme s'il « faisait son marché ».

On comprendra mieux l'invention à l'aide de la description faite ci-après de deux modes de mise en oeuvre en référence aux dessins annexés dans lesquels :
- Les figures 1A et 1F illustrent schématiquement un mode de mise en oeuvre dans lequel la papillote est extraite du conditionnement primaire,
- Les figures 2A à 21 illustrent schématiquement un mode de mise en oeuvre dans lequel la papillote reste conditionnée après ouverture dans le conditionnement primaire.

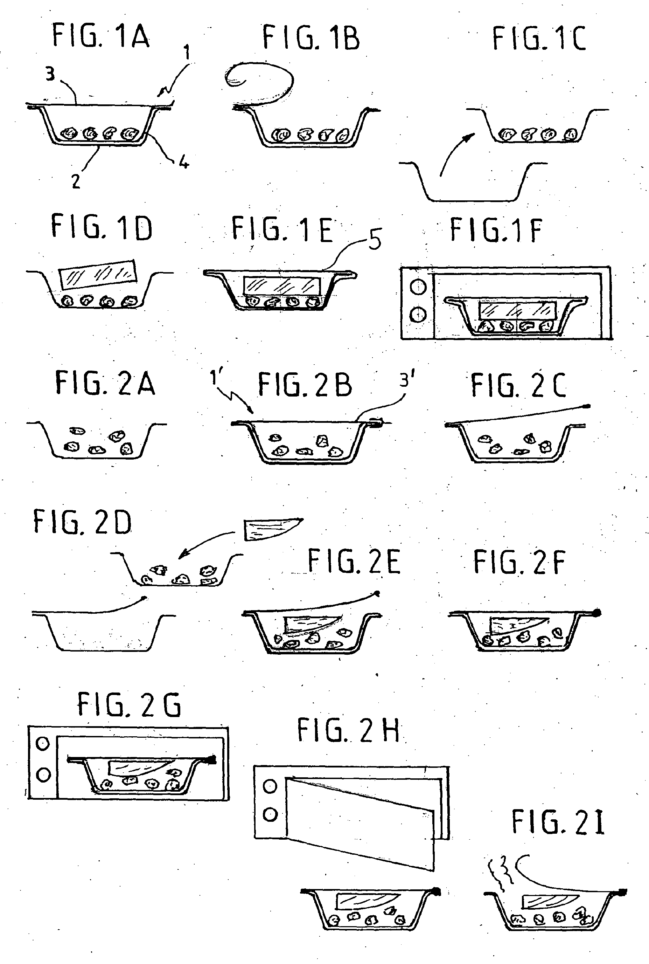

On se référera aux figures 1 A à 1 F.

On a représenté à la figure 1A une barquette généralement référencée (1) à fond rigide comportant un corps (2) et un opercule de fermeture (3) thermosoudé ou thermocollé. La barquette (1) contient un fond de papillotte (4) dans lequel sont disposées les garnitures telles que produits blanchis, précuits, séchés ou cuits avec ou sans sauce, ceci sans limitation des possibilités.

En l'état, ces produits ont une date limite de consommation usuelle de, par exemple, 3 à 60 jours dans des conditions de stockage et de consommation normale pour ce type de conditionnements.

Lorsque le consommateur a effectué son choix, le produit est désoperculé (figure 1B) et le fond de la papillote renfermant les ingrédients est sorti de la barquette.

Le détaillant y ajoute la matière première fraîche (ou marinée) choisie par le consommateur (figure 1D) et dispose autour de cet ensemble qu'il enveloppe de manière étanche, un film plastique souple (5) légèrement perforé de préférence, avec apposition d'une seconde date limite de consommation (figure 1 E).

Puis l'ensemble est passé au four à micro-ondes pour une cuisson vapeur (figure 1F).

Dans la variante des figures 2, la papillote est repositionnée au final dans la barquette (1'), l'opercule (3') de fermeture pouvant être ouvert de manière réversible, par exemple avec un système d'ouverture/fermeture à emboîtement élastique.

Après avoir placé dans le fond de papillote le produit choisi par le consommateur, l'opercule est refermé de manière étanche, on appose une deuxième date limite de consommation et la barquette est prête au transport puis à la cuisson.

## Revendications

1. Conditionnement pour la vente et la présentation à la vente d'un produit servant de base à une préparation culinaire, **caractérisé en ce qu'**il consiste en un conditionnement en forme de barquette (1) sous vide ou sous atmosphère modifiée, avec indication d'une date limite de consommation, d'ingrédients précuits et d'un fond de papillote (4) épousant sensiblement la forme du corps de la barquette, ledit conditionnement étant muni d'un moyen d'operculage étanche (3)avec indication d'une première date limite de consommation, ledit fond de papillote (4) comportant un volume suffisant pour recevoir, après ouverture, un produit frais choisi par le consommateur, avec apposition ultérieure sur un espace prévu à cette fin d'une seconde date limite de consommation spécifique audit produit frais.

2. Conditionnement selon la revendication 1, **caractérisé en ce que** la seconde date limite de consommation est apposée sur la même barquette (1) après ouverture de celle-ci, l'opercule (3) pouvant être ouvert ou fermé de manière réversible.

3. Conditionnement selon la revendication 1, **caractérisé en ce que** la seconde date limite de consommation est apposée sur un film transparent souple (5) enveloppant de manière étanche le fond de papillote (4) renfermant tous les ingrédients, ledit fond de papillote (4) ayant été extrait de la barquette (1).
